# EUROPEAN PATENT SPECIFICATION

(11) **EP 2 385 289 B1**
(45) Date of publication and mention of the grant of the patent: **27.04.2016**
(21) Application number: 10007067.1
(22) Date of filing: 08.07.2010
(51) Int. Cl.: F16L 37/084, F16L 37/092

(54) **Quick-coupling device for pipelines and the like**
Schnellkupplungsvorrichtung für Leitungen und dergleichen
Dispositif de raccord rapide pour conduits et similaire

(30) Priority: 04.05.2010 IT MI20100772
(43) Date of publication of application: 09.11.2011
(73) Proprietor: C.MATIC S.r.L., 20042 Albiate (Monza Brianza) (IT)
(72) Inventor: Confalonieri, Orazio, 20042 Albiate (Monza Brianza) (IT)
(74) Representative: Lunati & Mazzoni S.r.L.

(56) References cited:
- WO-A1-95/24582
- US-A- 5 005 877

## Description

The present invention relates to a quick-coupling device for pipelines and the like of the type pointed out in the preamble of the first claim.

This quick-coupling device is a device adapted to enable the connecting and disconnecting operations on pipes belonging to lines for circulation of fluids, possibly under pressure, to be made simple, safe and immediate, without needing use of particular tools.

Similar devices are described for example in patent applications: WO-A-9524582 and US-A-5005877.

Document WO-A-9524582 discloses the preamble of claim 1.

It is known that for accomplishment of hydraulic lines for fluids under pressure union of pipes to tanks, other pipelines or different other elements is required through means adapted to bring them into communication for fluid passage.

This means can contemplate two components, at least one of which is rigidly connected to one of the two pipes through suitable solutions such as welding or forcing operations, or pipe-clamping bands. These components are usually provided with threads adapted to mutually link them forming the above mentioned connection.

However, quick couplings are presently more and more frequently preferred to the above described means, said couplings being adapted to enable two pipes to be connected and disconnected through simple and quick manual operations. These couplings usually have two base elements: a socket and a fitting element adapted to be partly inserted in said socket.

In a first example of a coupling, described for example in ISO Standard 8434-1:2007(E) it is provided that connection between the fitting element and socket will take place by a forcing operation. In particular, in the socket the presence of three elements is contemplated: a first base body provided with a thread, a nut suitable for engagement with said thread and a conical element housed between said two components, in a suitable cavity formed in the base body. When the nut is secured to the base body, the conical element is forced between said base body and the fitting element thus creating the constraint.

Another type of coupling devices consists of the so-called quick couplings. In these couplings the fitting element has a throat or overhang on the outer surface, while the socket comprises an outer casing having a cylindrical cavity adapted to house the fitting element. This cavity further has a hollow in which a plurality of constraint elements are housed which are adapted to be radially moved due to the presence of an elastic O-ring.

At the beginning, the fitting element is inserted in the socket and the constraint elements are pushed by the outer surface of the fitting element into the hollow thus compressing the elastic ring. When the throat or overhang faces the constraint elements, the elastic ring radially pushes said elements that are inserted in the throat forming a constraint between fitting element and socket.

Finally, to enable quick release of this constraint, a sliding body is provided that, when manually pushed by an operator, disengages the constraint elements from the throat or overhang enabling separation of the fitting element from the socket. The above described known art has some important drawbacks.

In fact, both types of quick couplings presently known are subject to quick deterioration.

In the first example described above, in fact, the engagement and disengagement operations are rather slow, because it is necessary to act through use of spanners and the like.

In addition, constraint by friction can become inseparable due to deposits or deterioration of the material and, therefore, it becomes impossible to replace possible faulty components. In some cases, even use of suitable tools such as spanners for example, can be insufficient to release the constraint.

In the second example, a displacement of the constraint elements can occur which can bring to an unsteadiness of the quick coupling, i.e. the incapacity for supporting high pressures.

A further problem is given by the fact that known quick couplings are not adapted to withstand high pressures.

Still another problem is represented by the fact that the two types of actuators are not interchangeable with each other, i.e. it is impossible to couple the fitting element of one with the socket of the other.

Under this situation, the technical task underlying the present invention is to conceive a quick-coupling device for pipelines and the like capable of substantially obviating the mentioned drawbacks.

Within the scope of this technical task, it is an important aim of the invention to conceive a reliable and durable quick-coupling device. In particular, it is an important aim of the invention to enable the quick-coupling device to be used with ease and to avoid deterioration of same due to use.

A further fundamental aim of the invention is to obtain a quick-coupling device adapted to withstand high pressures.

Another important aim of the invention is to provide a device that is at least partly usable with the types of couplings presently known, in particular with the coupling in accordance with ISO Standard 8434-1:2007(E).

The technical task mentioned and the aims specified are achieved by a socket for a quick-coupling device for pipelines and the like as claimed in the appended Claim 1. Preferred embodiments are highlighted in the sub-claims.

The features and advantages of the invention are hereinafter clarified by the detailed description of preferred embodiments of the invention, with reference to the accompanying drawings, in which:
**Fig. 1** shows a scale quick-coupling device according to the invention;
**Fig. 2** shows an element of the quick coupling partly in section;
**Fig. 3** shows a component of the element seen in Fig. 2 partly in section;
**Fig. 4** is a sectional view of a second component of the element seen in Fig. 2;
**Fig. 5a** is a sectional view of an assembly consisting of two other components of the element in Fig. 2;
**Fig. 5b** is a top view of the assembly shown in Fig. 5a;
**Fig. 6** reproduces a further component of the element seen in Fig. 2;
**Fig. 7** represents a partly sectional view of a second element of the quick-coupling device in accordance with the invention;
**Fig. 8** diagrammatically shows a particular coupling partly of known type, in accordance with ISO Standard 8434-1:2007;
**Fig. 9** reproduces a possible configuration of the quick-coupling device according to the invention;
**Fig. 10** shows a second possible configuration of the quick-coupling device according to the invention;
**Fig. 11** shows a third possible configuration of the quick-coupling device in accordance with the invention.

With reference to the drawings, the quick-coupling device for pipelines and the like in accordance with the invention has been generally identified by reference numeral **1**.

It is adapted to connect, in a quick and easily separable manner, two pipes 20 or, alternatively, one pipe 20 to a device such as a compressor, a tank or other similar device.

The quick coupling 1 comprises a socket **2** having a central axis **2a** and a fitting element **3** adapted to be partly fitted in socket 2 and coupled thereto, preferably being of cylindrical shape. In particular, the fitting element 3 is connected to a pipe 20, while socket 2 is connected to a tank or the like by threading.

The socket 2 and fitting element 3 internally have a first channel **2d** and a second channel **3b** respectively, that are mutually connected for fluid passage, when the socket 2a and fitting element 3 are fastened to each other. In more detail, the first channel 2d is adapted to receive the fitting element 3 through an inlet **2c**. The second channel 3b on the contrary comprises an outlet **3e** through which the fluid flows from the fitting element 3 to the socket.

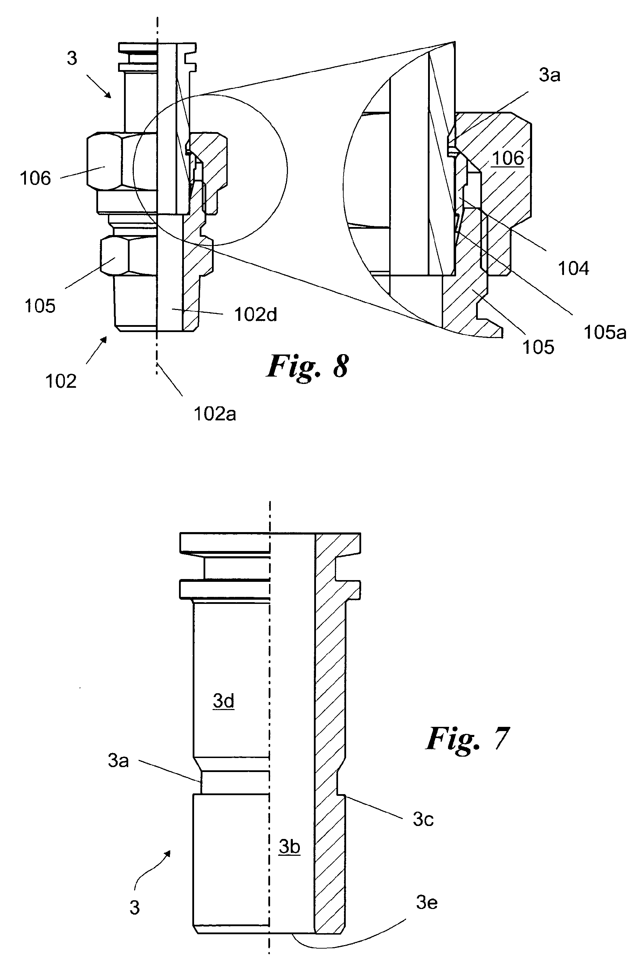

The fitting element 3, shown in Fig. 7, externally has a coupling surface **3d** that is substantially cylindrical and an axis of which is substantially coincident with the central axis 2a, when the fitting element is inserted in the socket 2. Furthermore, this coupling surface 3d is continuous, i.e. devoid of overhangs or other similar elements except for a single discontinuity represented by a throat **3a** that is axially symmetric to, and made to a given distance from the outlet 3e, as hereinafter better specified. It also has a counter-surface **3c** close to the outlet 3e and substantially perpendicular to the central axis 2a.

The socket 2 in summary comprises a constraint element **4** that can be moved in a radial direction relative to the central axis 2a and preferably has an almost circular shape, an outer body **5** defining a first portion of channel 2c and adapted to at least partly contain the constraint element 4, and an extractor **6** defining a second portion of channel 2c and adapted to move relative to the outer body 5 in a direction almost parallel to the central axis 2a.

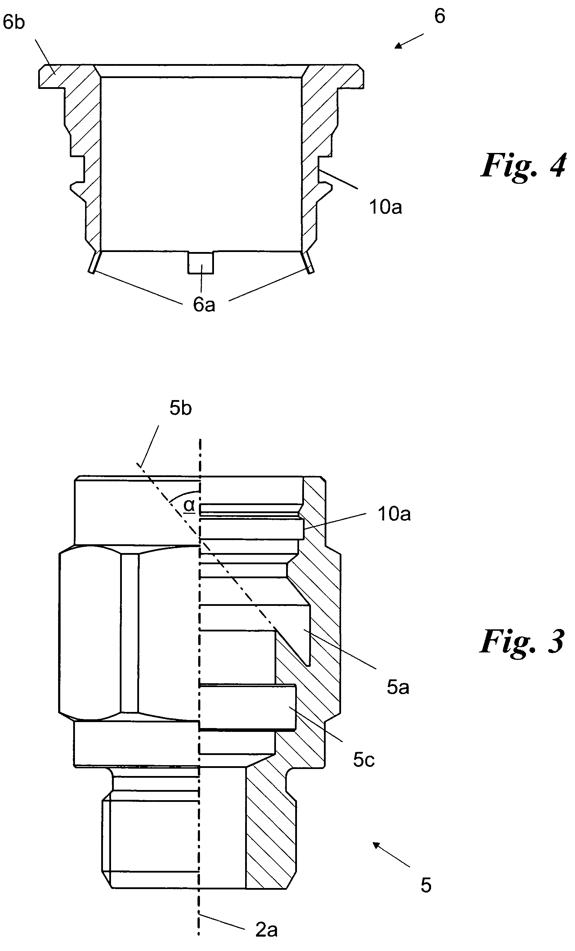

In greater detail, the outer body 5 has an annular cavity **5a** facing cavity 2c and adapted to at least partly house the constraint element 4. This annular cavity 5a extends, as shown in Fig. 3, in an inclined direction **5b** relative to the central axis 2a through an angle α in such a manner that the constraint element 4, when it deviates in a radial direction towards the central axis 2a, simultaneously moves in the direction of the central axis 2a towards the inlet 2c. In particular, angle α is substantially included between 45° and 55° and, preferably, angle α is included between 48° and 52°.

Finally, the body 5 substantially has a cylindrical shape and, preferably, a suitably shaped outer surface so that it can be easily grasped by prong spanners or the like. Further, it can be advantageously provided with an outer thread adapted to carry out a connection by screwing with a tank or the like. The constraint element 4 advantageously comprises a plurality of constraint sectors **7**, preferably four in number, that are at least partly housed in the annular cavity 5a. The constraint sectors 7 are adapted to be mutually and radially moved. In detail, due to the particular geometry of the annular cavity 5a, sectors 7, during their radial displacement, advantageously move along an inclined direction 5b, i.e. they simultaneously move in a radial direction and in a direction parallel to the central axis 2a to the inlet 2c.

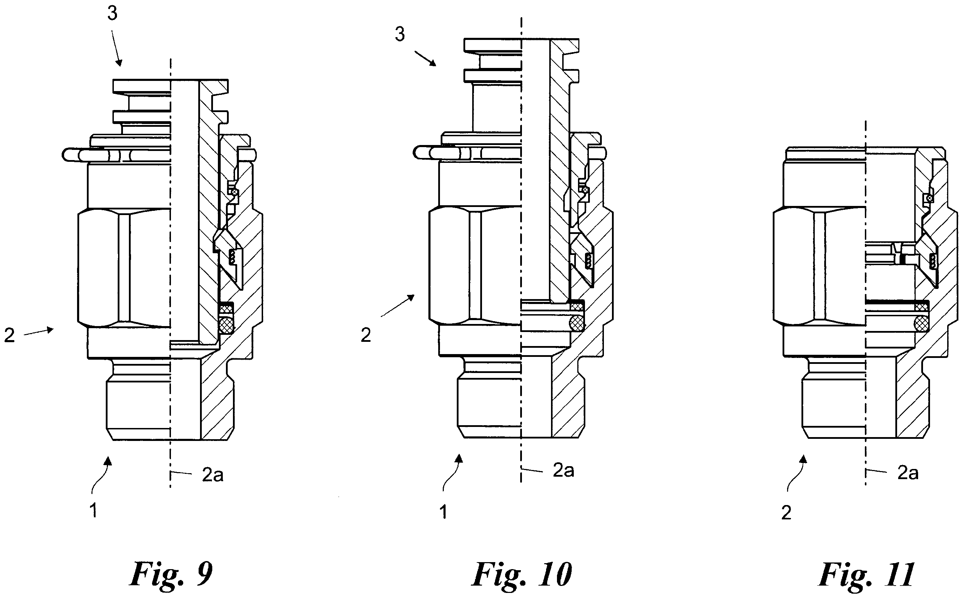

Said movement allows two different positions of the constraint element 4 to be defined: a release position (Figs. 10 and 11) at which positioning of the constraint sectors 7 is adapted to enable movement of the fitting element 3 relative to socket 2; and a tightening position at which the constraint sectors mutually and tightly connect said two components.

In detail, in the tightening position only a portion of the constraint element 4 is inside cavity 5a, while in the release position the constraint sectors 7 are spaced apart from each other to a greater extend and almost fully disposed within cavity 5a. In conclusion, in moving from the release position to the tightening position, there is a reduction in the distance between the constraint sectors 7 and a consequent reduction in the diameter of the constraint element 4, respectively.

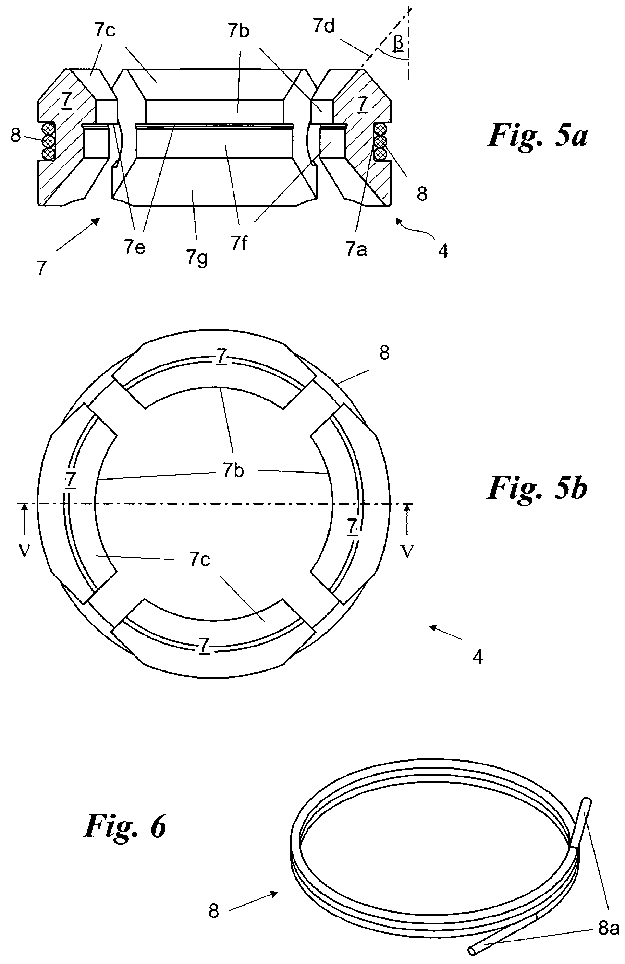

In particular, reduction in the distance between the constraint sectors 7 is obtained through a spring **8** externally surrounding the constraint element 4, as shown in Figs. 5a and 5b. Said spring is disposed within a housing **7a** placed on the outer edge, i.e. the one to a greater distance from the central axis 2a, of each constraint sector 7. In addition, spring 8 is adapted to take up almost the whole height of the housing 7a calculated in a direction parallel to the central axis 2a, so as to ensure correct positioning of spring 8 and avoid undesired movements of same.

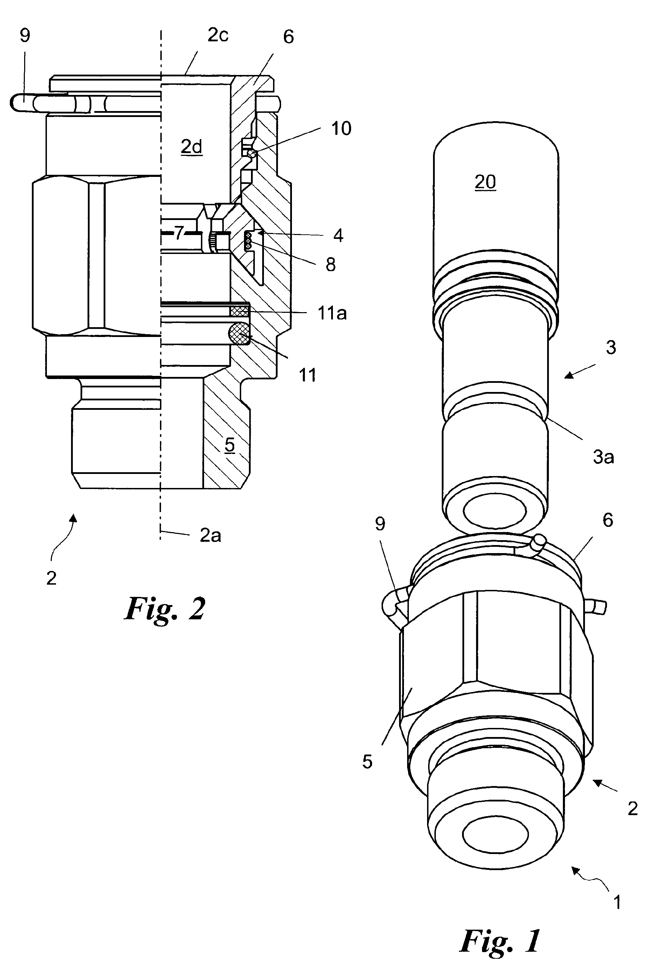

In detail, spring 8 is a metal helical spring preferably made of steel and preferably a spiral spring the ends **8a** of which are rectilinear in order to avoid them being inserted between two constraint sectors 7, when the constraint element is in a release position, inhibiting return to the tightening position. In particular, the ends 8a are tangent to the circumference defined by spring 8 in a rest position (Fig. 2).

Finally, each of the constraint sectors 7 has a projection **7b** on its face close to the central axis 2a, as shown in Figs. 5a and 5b, which projection in the tightening position enters cavity 3a locking the fitting element 3 and socket 2 with each other while, upon movement to the release position, it comes out of said cavity 3a enabling mutual motion between the fitting element 3 and socket 2.

The projection 7b has an upper conical wall **7c** advantageously extending in an oblique direction **7d**, being inclined through an angle β relative to the central axis 2a (Fig. 5a) and adapted to allow movement of the constraint element 4 from the tightening position to the release position, when the fitting element 3 is inserted in socket 2. In particular, the fitting element 3, when inserted in socket 2, exerts pressure on the upper conical surface 7c causing sectors 7 to enter the annular cavity 5a and therefore allowing full introduction of the fitting element 3. In particular angle β is substantially included between 45° and 55° and, preferably, it is included between 48° and 52°.

In addition, due to the presence of a lower wall **7g**, extraction of the fitting element 3 is facilitated. In fact, the extractor 6 is adapted to press on said upper conical wall 7c so as to move the constraint element 4 from the tightening position to the release position, thus clearing the throat 3a and allowing the fitting element 3 to be pulled out.

In addition, projection 7b has a lower surface **7e** almost perpendicular to the central axis 2a, said surface being adapted to interact with the counter-surface 3c of the throat 3a. Due to this geometry, in the extraction direction of the fitting element 3 the lower surface 7e abuts against the counter-surface 3c preventing the fitting element 3 from being pulled out and tightening it in alignment with axis 2a. This advantage is also obtained due to the cavity 5a that, being inclined in the opposite direction relative to the extraction direction of the fitting element 3, prevents an undesired separation of the quick-coupling device 1. Furthermore, the upper surface of the cavity 5a promotes entry of the projection 7b into the throat 3a when tightening occurs.

Finally, each sector 7 has a cylindrical surface **7f** with an axis substantially coincident with axis 2a, suitably under the lower surface 7e and preferably also at projection 7b.

The extractor 6 is adapted to move relative to the outer body 5 in a direction almost parallel to the central axis 2a and is advantageously provided, at the lower base opposite to the abutment disc 6b, with teeth **6a** (Fig. 4) adapted to be disposed between the constraint sectors 7. In particular, when the constraint element 4 moves to a tightening position, the constraint sectors 7 abut against teeth 6a determining a minimum distance between said constraint sectors 7 and, therefore, a minimum size of the constraint element 4. Finally, the number of teeth 6a is preferably the same as that of the constraint sectors 7, i.e. four.

In addition, the lower base of extractor 6 and the upper base of the constraint element 4 are advantageously inclined to the central axis 2a and parallel to each other, so that movement of extractor 6 gives rise to a displacement of the constraint sectors 7 and vice versa. In greater detail, lowering of extractor 6 causes an increase in the sizes of the constraint element 4, i.e. passage of same to a release position (Fig. 1), whereas a reduction in the sizes of the constraint element 4, i.e. a return to the tightened position, causes raising of extractor 6.

In addition, the extractor 6 is partly housed within the outer body 5 and has an almost cylindrical shape. At the base external to the outer body 5 it has an abutment disc **6b** (Fig. 4) adapted to bear against the upper edge of the external body 5 when the extractor 6 is pressed against said outer body 5. Socket 2 in addition to the above mentioned components comprises a stop ring **9** adapted to be inserted, once locking between fitting element 3 and socket 2 has been completed, between the abutment disc 6b and the outer body 5 to prevent movement of extractor 6 relative to said outer body 5. Preferably the stop ring 9 is an open spring ring, i.e. its circumference is split and more specifically it is a Seger ring or the like.

In order to prevent extractor 6 from coming out of the outer body 5, the extractor stroke is further limited by a retainer **10** shown in Fig. 2. This retainer 10 is simultaneously housed in two grooves **10a** formed in the extractor 6 and the outer body 5 and adapted to always face each other at least partly. Retainer 10 preferably consists of an open spring ring so as to facilitate insertion thereof into grooves 10a. In particular, during the mounting step, it is enlarged and easily inserted in the grooves 10a of extractor 6. Once it has been positioned, it is allowed to expand so as to adhere to said groove 10a and, finally, extractor 6 is forcibly inserted into the outer body 2.

Socket 2 further comprises an O-ring **11** or other similar means adapted to ensure the sealing action of the fluid coupling 1. The O-ring 11 is advantageously at least partly housed in a hollow **5c** (Fig.3) conveniently formed in the outer body 5 under cavity 5a and, in order to avoid dangerous displacements of the O-ring 11, a sealing component **11a**, a ring for example, can be disposed within the hollow 5c, so as to lock the O-ring 11 in the hollow 5c.

Shown in Fig. 8 is a second possible configuration of the ogive-shaped coupling device according to ISO Standard 8434-1:2007, which is adapted to bring into fluid connection two pipes 20 or one pipe 20 to a device, such as a tank.

In this example the coupling device comprises a fitting element 3 and a socket **102** having a central axis **102a** and including a first channel **102d** adapted to house the fitting element 3.

Socket 102, as shown in Fig. 8, has a locking element **104** adapted to secure the fitting element 3 to the socket 102 by tightening, a base body **105** provided with a cavity **105a** adapted to at least partly contain the locking element 104, and a closing element **106** adapted to be secured to the base body 101, preferably by threading, carrying out said tightening of the locking element 104. In this preferred embodiment, the closing element 106 is adapted to be moved along the central axis 102a and to be rigidly secured to the base body 105 by a threaded coupling, while the locking element 104 has an almost cylindrical shape characterised by a frustoconical end adapted to be inserted in cavity 105a.

In particular, after the fitting element 3 has been inserted into the socket 102, the closing element 106, being secured to the base body 105, presses the locking element 104 within the cavity 105a, which locking element is therefore forced between the fitting element 3 and socket 102 thus carrying out tightening of the fitting element 3 to socket 102.

The socket 102 preferably has sizes in accordance with ISO Standard 8434-1:2007 or subsequent modifications to said ISO Standard.

The fitting element 3, shown in Fig. 7, is the one previously described and the given distance of throat 3a is greater than the distance between the cavity 105a and outlet 3e when the fitting element 3 is secured to the socket 102, so that it does not interfere with said tightening action.

Finally, as in the preceding preferred embodiment, throat 3a has a counter-surface 3c, i.e. the surface of throat 3a close to the outlet 3e, that is preferably substantially perpendicular to the central axis 102a.

Operation of the quick-coupling device for pipelines and the like described above as regards structure is the following.

Once pipes 20 have been connected to socket 2 and to the fitting element 3, the fitting element 3 is inserted into socket 2 so that said components are secured to each other.

The fitting element 3 passes through the extractor 6 and abuts against the projections 7b of the constraint sectors 7. Then the fitting element 3 starts pressing on said projections 7b causing passage from the tightening position to the release position of the constraint element 4.

In particular, the constraint sectors 7 are moved apart from each other, i.e. the constraint element increases its diameter and the constraint sectors 7 are almost fully housed within cavity 5a (Fig. 10) thus enabling the fitting element 3 to complete its fitting. In particular, the fitting element 3 continuing its travel comes into contact with the O-ring 11 deforming it and carrying out a fluid-tight connection.

When the fitting element 3 is inserted, the throat 3a faces the constraint sectors 7 that, being pressed by spring 8, urge the projections 7b into said throat 3a securing the fitting element 3 to the socket 2 and bringing the constraint element 4 back to its tightening position, as shown in Fig. 4.

In addition, due to their displacement, the constraint sectors 7 abut the teeth 6a bringing the constraint element 4 to sizes close to the minimum ones, but not strictly coincident with said minimum sizes. Consequently, the constraint element 4 axially compresses the fitting element 3 centring it on axis 2a, in particular by means of the cylindrical surface 7f.

In addition, before locking, the stop ring 9 is preferably introduced between the abutment disc 6b and the outer body 5 inhibiting any motion of the extractor 6, so as to avoid an undesirable disengagement of the quick-coupling device 1.

When the quick-coupling device 1 is wished to be disengaged, i.e. the fitting element 3 is wished to be separated from socket 2, the stop ring 9 is removed from its housing and the extractor is lowered bringing the abutment disc 6b almost in contact with the outer body 5.

This movement of extractor 6 causes passage of the constraint element 4 from the tightening position to the release position, i.e. projections 7b of the constraint sectors 7 come out of throat 3a enabling the fitting element 3 to be pulled out of socket 2.

Once the fitting element 3 has been pulled out, the constraint element 4 due to spring 8 goes back to the tightening position with the constraint sectors 7 being adjacent to teeth 6a, as shown in Fig. 11.

The invention enables important advantages to be achieved.

A first advantage of the quick-coupling device 1 is represented by the high reliability and duration.

In fact, due to the presence of teeth 6a, the constraint sectors 7 going back to the tightening position are not submitted to dangerous mutual displacements and their mutual distance is almost unchanged and therefore the tightening quality between fitting element 3 and socket 2 is not lowered.

Another advantage is represented by the quick-coupling device ability that is ensured by the particular geometry of the lower surface 7e and the counter-wall 3c. The quick-coupling device 1 is therefore able to withstand pressures up to 350 bars.

Still another advantage is provided by the metal spring 8 adapted to have a longer duration and greater spring force, also ensured by the number and shape of sectors 7.

A further important advantage is represented by the possibility of using the fitting element 3 also with ogive-shaped coupling devices of the type ISO Standard 8434-1:2007 presently known. In fact, the particular height where the throat 3a is formed does not prevent the known quick-coupling devices as above described to be connected and fastened.

The invention is susceptible of variations falling within the inventive idea.

All of the details can be replaced by equivalent elements and the materials, shapes and sizes can be of any nature and magnitude.

## Claims

1. A socket (2) for a quick-coupling device (1) in circuits for circulation of fluids under pressure, said quick-coupling device (1) further comprising a fitting element (3) including a second channel (3b), said socket comprising a central axis (2a), a first channel (2d) internal to said socket (2), and an inlet (2c) of said first channel (2d); said first channel (2d) being adapted to house said fitting element (3) and being brought into fluid communication with said second channel (3b); said socket (2) further comprising an outer body (5) defining at least part of said first channel (2d) and comprising an annular cavity (5a) opening on said first channel (2d), a substantially annular constraint element (4) at least partly housed in said annular cavity (5a) and movable within said cavity, and including a plurality of constraint sectors (7) consisting of circular sectors of said constraint element (4) which are adapted to be mutually moved in a radial direction and define a release position at which said constraint element (4) is retracted into said annular cavity (5a) in such a manner as to enable movement of said fitting element (3) relative to said socket (2), and a tightening position at which said constraint element (4) tightly secures said fitting element (3) to said socket (2), an extractor (6) partly housed in said outer body (5) and movable along said central axis (2a) relative to said outer body (5), and adapted to move said constraint element (4) from said tightening position to said release position, **characterised in that** said extractor (6) comprises feet (6a) placed between said constraint sectors (7) and adapted to maintain a minimum distance between said constraint sectors (7).

2. A socket (2) as claimed in claim 1, comprising a spring (8) adapted to dispose said constraint element (4) in said tightening position in the absence of counter-forces.

3. A socket (2) as claimed in claim 2, wherein said spring (8) is a helical metal spring and has rectilinear ends (8a).

4. A socket (2) as claimed in one or more of claims 2-3, wherein each of said constraint sectors (7) has a housing (7a) opening on said outer body (5) and adapted to house said spring (8) at least partly.

5. A socket (2) as claimed in one or more of the preceding claims, wherein said annular cavity (5a) extends in an inclined direction (5b) relative to said central axis (2a) in such a manner that, when said constraint sectors (7) move in a radial direction towards said central axis (2a), said constraint sectors (7) move simultaneously in the direction of said central axis (2a) towards said inlet (2c).

6. A socket (2) as claimed in one or more of the preceding claims, wherein said constraint element (4), when said socket (2) houses said fitting element (3), is adapted to align said fitting element to said central axis (2a).

7. A socket (2) as claimed in one or more of the preceding claims, wherein said extractor (6) has an abutment disc (6a) adapted to abut on said outer body (5), and wherein said socket (2) comprises a stop ring (9) adapted to be introduced between said abutment disc (6b) and said outer body (5) thereby inhibiting the motion of said extractor (6) relative to said outer body (5).

8. A socket (2) as claimed in one or more of the preceding claims, wherein said constraint sectors (7) comprise a projection (7b) adapted to secure said fitting element (3) into said socket (2), when said constraint element (4) is in said tightening position.

9. A socket (2) as claimed in claim 8, wherein said projection (7b) comprises an upper conical wall (7c) extending in an oblique direction (7d) relative to said central axis (2a) and adapted to allow movement of said constraint element (4) from said tightening position to said release position, when said fitting element (3) is inserted in said socket (2).

10. A socket (2) as claimed in claim 9, wherein said extractor (6) is adapted to exert pressure on said upper conical wall (7c) in such a manner as to move said constraint element (4) from said tightening position to said release position.

11. A socket (2) as claimed in one or more of claims 8-10, wherein said projection (7b) has a lower surface (7e) that is substantially perpendicular to said central axis (2a).

12. A quick-coupling device (1) for circuits for circulation of fluids under pressure comprising a socket (2) as claimed in one or more of claims 8-11, and a fitting element (3), and wherein said fitting element (3) has a throat (3a) adapted to receive said projection (7b).

13. A quick-coupling device (1) as claimed in claim 12, wherein said throat (3a) has a counter-surface (3c) which is substantially perpendicular to said central axis (2a) and is adapted to interfere with said projection (7b).

## Patentansprüche

1. Vorrichtung (2) als Schnellkupplung (1) für unter Druck stehende fluiddynamische Kreisläufe, wobei die genannte Vorrichtung (1) außerdem eine Verbindung (3) mit einem zweiten Kanal (3b) umfasst und die genannte Vorrichtung (2) eine Mittelachse (2a), einen ersten Kanal (2d) im Inneren der genannten Vorrichtung (2) und eine Eingangsmündung (2c) des genannten ersten Kanals (2d) umfasst; wobei der genannte ersten Kanal (2d) geeignet ist, die genannte Verbindung (3) unterzubringen und sich als Durchgang für das Medium mit dem genannten zweiten Kanal (3b) zu verbinden; wobei die genannte Vorrichtung (2) außerdem einen äußeren Körper (5), der wenigstens einen Teil des genannten ersten Kanals (2d) definiert und eine ringförmige Kavität (5a), die zu dem genannten ersten Kanal (2d) gerichtet ist und ein im wesentlichen ringförmiges Dichtungselement (4), das wenigstens teilweise in der genannten ringförmigen Kavität (5a) untergebracht ist und sich im Inneren derselben bewegen kann, umfasst und eine Vielzahl an Verbindungsabschnitten (7) einschließt, die aus kreisförmigen Abschnitten des genannten Dichtungselements (4) bestehen und geeignet sind, miteinander in Radialrichtung bewegt zu werden und so eine Freigabeposition, in der das genannte Dichtungselement (4) in das Innere der genannten ringförmigen Kavität (5a) zurückgezogen ist, um die Bewegung der genannten Verbindung (3) im Verhältnis zu der genannten Vorrichtung (2) zu gestatten, und eine Spannposition, in der das genannte Dichtungselement (4) die genannte Verbindung (3) mit der genannten Vorrichtung (2) verbindet, zu definieren, einen teilweise in dem genannten äußeren Körper (5) untergebrachten Abzieher (6), der entlang der Mittelachse (2a) im Verhältnis zu dem genannten äußeren Körper (5) bewegt werden kann und geeignet ist, das genannte Dichtungselement (4) aus der genannten Spannposition in die genannte Freigabeposition zu bewegen, **dadurch gekennzeichnet, dass** der genannte Abzieher (6) Zähne (6a) zwischen den genannten Verbindungsabschnitten (7) umfasst, die geeignet sind, einen Mindestabstand zwischen den genannten Verbindungsabschnitten (7) zu erhalten.

2. Vorrichtung (2) nach Anspruch 1, die eine Feder (8) umfasst, die geeignet ist, das genannte Dichtungselement (4) mangels entgegenwirkender Kräfte in der genannten Spannposition zu halten.

3. Vorrichtung (2) nach Anspruch 2, bei der die genannte Feder (8) schraubenförmig und aus Metall ist und gerade Enden (8a) aufweist.

4. Vorrichtung (2) nach einem oder mehreren der Ansprüche 2-3, bei der jeder der genannten Verbindungsabschnitte (7) eine zu dem genannten äußeren Körper (5) gerichtete Unterbringung (7a) aufweist und geeignet ist, die genannte Feder wenigstens teilweise (8) aufzunehmen.

5. Vorrichtung (2) nach einem oder mehreren der vorangegangenen Ansprüche, bei der die genannten ringförmige Kavität (5a) in geneigter Richtung (5b) im Verhältnis zur Mittelachse (2a) verläuft, so dass, wenn die genannten Verbindungsabschnitte (7) in Radialrichtung zu der genannten Mittelachse (2a) verschoben werden, die genannten Verbindungsabschnitte (7) gleichzeitig in Richtung der genannten Mittelachse (2a) zur Eingangsmündung (2c) verschoben werden.

6. Vorrichtung (2) nach einem oder mehreren der vorangegangenen Ansprüche, bei der das genannte Dichtungselement (4), wenn die genannte Vorrichtung (2) in der genannten Verbindung (3) untergebracht ist, geeignet ist, die genannte Verbindung mit der genannten Mittelachse (2a) auszurichten.

7. Vorrichtung (2) nach einem oder mehreren der vorangegangenen Ansprüche, bei der der genannte Abzieher (6) eine Anschlagscheibe (6b) aufweist, die geeignet ist, an dem genannten äußeren Körper (5) anzuschlagen und bei der die genannte Vorrichtung (2) einen Stoppring (9) umfasst, der geeignet ist, zwischen der genannten Anschlagscheibe (6b) und dem genannten äußeren Körper (5) eingesetzt zu werden und so die Bewegung des genannten Abziehers (6) im Verhältnis zum äußeren Körper (5) zu unterbinden.

8. Vorrichtung (2) nach einem oder mehreren der vorangegangenen Ansprüche, bei der die genannten Verbindungsabschnitte (7) einen Überstand (7b) umfassen, der geeignet ist, die genannte Verbindung (3) in der genannten Vorrichtung (2) zu halten, wenn das genannte Verbindungselement (4) sich in der genannten Spannposition befindet.

9. Vorrichtung (2) nach Anspruch 8, bei der der genannte Überstand (7b) eine konische obere, im Verhältnis zur genannten Mittelachse (2a) in Schrägrichtung verlaufende Wand (7c) umfasst, die geeignet ist, die Bewegung des genannten Dichtungselements (4) aus der genannten Spannposition in die genannte Freigabeposition zu gestatten, wenn die genannte Verbindung (3) in der genannten Vorrichtung (2) eingesetzt ist.

10. Vorrichtung (2) nach Anspruch 9, bei der der genannte Abzieher (6) geeignet ist, auf die genannte konische obere Wand (7c) zu drücken, um das genannte Dichtungselement (4) aus der genannten Spannposition in die genannte Freigabeposition zu bewegen.

11. Vorrichtung (2) nach einem oder mehreren der Ansprüche 8-10, bei der der genannte Überstand (7b) eine im Wesentlichen zu der genannten Mittelachse (2a) senkrechte untere Oberfläche (7e) aufweist.

12. Schnellkupplung (1) für unter Druck stehende fluiddynamische Kreisläufe, die eine Vorrichtung (2) nach einem oder mehreren der Ansprüche 8-11 und eine Verbindung (3) umfasst und bei der die genannte Verbindung (3) eine Nut (3a) aufweist, die geeignet ist, den genannten Überstand (7b) aufzunehmen.

13. Schnellkupplung (1) nach Anspruch 12, bei der die genannte Nut (3a) eine im Wesentlichen zu der genannten Mittelachse (2a) senkrechte Kontrastfläche (3c) bildet und geeignet ist, auf den genannten Überstand (7b) zu wirken.

## Revendications

1. Dispositif (2) de raccord rapide (1) pour circuits fluidodynamiques sous pression, ledit raccord rapide (1) comprenant en outre un accouplement (3) incluant un deuxième canal (3b), ledit dispositif (2) comprenant un axe central (2a), un premier canal (2d) interne audit dispositif (2), et une bouche d'entrée (2c) dudit premier canal (2d) ; ledit premier canal (2d) étant apte à loger ledit accouplement (3) et à s'accoupler en connexion de passage fluide avec ledit deuxième canal (3b) ; ledit dispositif incluant en outre un corps externe (5) définissant au moins une partie dudit premier canal (2d) et comprenant une cavité annulaire (5a) faisant face audit premier canal (2d), un élément d'étanchéité (4) essentiellement annulaire, logé au moins partiellement dans ladite cavité annulaire (5a) et mobile à l'intérieur de cette dernière et incluant une pluralité de secteurs d'assujettissement (7), constitués de secteurs circulaires dudit élément d'étanchéité (4) aptes à être mis en mouvement réciproquement en direction radiale et définissant une position de relâche, dans laquelle ledit élément d'étanchéité (4) est rentré à l'intérieur de ladite cavité annulaire (5a) de façon telle à permettre le mouvement dudit accouplement (3) par rapport audit dispositif (2) et une position de serrage, dans laquelle ledit élément d'étanchéité (4) assujettit ledit accouplement (3) audit dispositif (2), un extracteur (6) partiellement logé dans ledit corps externe (5) et mobile le long dudit axe central (2a) par rapport audit corps externe (5) et apte à mettre en mouvement ledit élément d'étanchéité (4) de ladite position de serrage à ladite position de relâche, **caractérisé en ce que** ledit extracteur (6) comprend des dents (6a) placées entre lesdits secteurs d'assujettissement (7) et aptes à maintenir une distance minimale entre lesdits secteurs d'assujettissement (7).

2. Dispositif (2) selon la revendication 1, comprenant un ressort (8) apte à mettre ledit élément d'étanchéité (4) dans ladite position de serrage en l'absence de forces d'opposition.

3. Dispositif (2) selon la revendication 2, dans lequel ledit ressort (8) est hélicoïdal, métallique et avec extrémités (8a) rectilignes.

4. Dispositif (2) selon une ou plusieurs des revendications 2-3, dans lequel chacun desdits secteurs d'assujettissement (7) présente un logement (7a), faisant face audit corps externe (5) et apte à loger au moins partiellement ledit ressort (8).

5. Dispositif (2) selon une ou plusieurs des revendications précédentes, dans lequel ladite cavité annulaire (5a) s'étend en direction inclinée (5b) par rapport audit axe central (2a) de façon telle que, lorsque lesdits secteurs d'assujettissement (7) se déplacent en direction radiale vers ledit axe central (2a), lesdits secteurs d'assujettissement (7) se déplacent simultanément en direction dudit axe central (2a) vers ladite bouche d'entrée (2c).

6. Dispositif (2) selon une ou plusieurs des revendications précédentes, dans lequel ledit élément d'étanchéité (4), lorsque ledit dispositif (2) sert de logement audit accouplement (3), est apte à aligner ledit accouplement sur ledit axe central (2a).

7. Dispositif (2) selon une ou plusieurs des revendications précédentes, dans lequel ledit extracteur (6) présente un plateau de butée (6b) apte à aller en butée contre ledit corps externe (5), et dans lequel ledit dispositif (2) comprend une bague d'arrêt (9) apte à s'insérer entre ledit plateau de butée (6b) et ledit corps externe (5) empêchant le mouvement dudit extracteur (6) par rapport audit corps externe (5).

8. Dispositif (2) selon une ou plusieurs des revendications précédentes, dans lequel lesdits secteurs d'assujettissement (7) comprennent une saillie (7b) apte à assujettir ledit accouplement (3) dans ledit dispositif (2), lorsque ledit élément d'assujettissement (4) est dans ladite position de serrage.

9. Dispositif (2) selon la revendication 8, dans lequel ladite saillie (7b) comprend une partie supérieure conique (7c) s'étendant en direction oblique (7d) par rapport audit axe central (2a) et apte à permettre le mouvement dudit élément d'assujettissement (4) de ladite position de serrage à ladite position de relâche, lorsque ledit accouplement (3) est inséré dans ledit dispositif (2).

10. Dispositif (2) selon la revendication 9, dans lequel ledit extracteur (6) est apte à exercer une pression sur ladite paroi supérieure conique (7c) de façon telle à mettre en mouvement ledit élément d'étanchéité (4) de ladite position de serrage à ladite position de relâche.

11. Dispositif (2) selon une ou plusieurs des revendications 8-10, dans lequel ladite saillie (7b) présente une surface inférieure (7e) essentiellement perpendiculaire audit axe central (2a).

12. Raccord rapide (1) pour circuits fluidodynamiques sous pression comprenant un dispositif (2) selon une ou plusieurs des revendications 8-11 et un accouplement (3) et dans lequel ledit accouplement (3) présente une gorge (3a) apte à accueillir ladite saillie (7b).

13. Raccord rapide (1) selon la revendication 12, dans lequel ladite gorge (3a) présente une surface d'opposition (3c) essentiellement perpendiculaire audit axe central (2a) et apte à interférer avec ladite saillie (7b).
